# EUROPÄISCHE PATENTSCHRIFT

(11) **EP 3 718 388 B1**
(45) Veröffentlichungstag und Bekanntmachung des Hinweises auf die Patenterteilung: **13.04.2022**
(21) Anmeldenummer: 20164919.1
(22) Anmeldetag: 23.03.2020
(51) Int. Cl.: A01C 7/04, A01C 7/08, A01C 7/20

(54) **LANDWIRTSCHAFTLICHE VORRICHTUNG MIT DOSIERVORRICHTUNGEN UMFASSEND DREI DRUCKLUFTZUFÜHRUNGEN**
AGRICULTURAL DEVICE WITH METERING DEVICES COMPRISING THREE COMPRESSED AIR FEEDS
DISPOSITIF AGRICOLE POURVU DE DISPOSITIFS DE DOSAGE COMPORTANT TROIS CONDUITES D'ALIMENTATION EN AIR COMPRIMÉ

(30) Priorität: 05.04.2019 DE 102019108992
(43) Veröffentlichungstag der Anmeldung: 07.10.2020
(73) Patentinhaber: Horsch Maschinen GmbH, 92421 Schwandorf (DE)
(72) Erfinder: Köbler, Manfred, 92421 Schwandorf (DE)
(74) Vertreter: v. Bezold & Partner Patentanwälte - PartG mbB

(56) Entgegenhaltungen:
- EP-A1- 2 496 064
- EP-A1- 2 923 545
- DE-A1-102007 062 967
- US-A1- 2018 310 468

## Beschreibung

Die Erfindung betrifft eine landwirtschaftliche Vorrichtung zum Ausbringen und/oder Verteilen von insbesondere vereinzelten Körnern auf einem Ackerboden (z. B. in einer Furche im Ackerboden), mit einer Vielzahl von Dosiervorrichtungen (insbesondere Vereinzelungsvorrichtungen) zum Druckdifferenz-basierten Vereinzeln von Körnern mittels eines Vereinzelungsorgans.

Zum Stand der Technik kann zunächst auf die DE 10 2010 016 389 A1 verwiesen werden und insbesondere auf die WO 2016 165 990 A1, die eine landwirtschaftliche Verteilvorrichtung zum Ausbringen von körnigem Gut offenbart, mit mehreren Dosiereinrichtungen, die zur Vereinzelung des körnigen Gutes mittels einer Druckdifferenz ausgebildet sind. Die einzelnen Dosiereinrichtungen umfassen eine erste Leitungsverbindung, die mit einem Korn-Behältnis in Verbindung steht und die eine Strömungserzeugungseinrichtung fluidisch an die Dosiereinrichtung koppelt, um der Dosiereinrichtung mittels eines Luftstroms körniges Gut zuzuführen, und eine zweite Leitungsverbindung, die die Strömungserzeugungseinrichtung fluidisch an die Dosiereinrichtung koppelt, um das körnige Gut in der Dosiereinrichtung mittels eines Luftstroms zu vereinzeln. Die erste Leitungsverbindung mündet in einen ersten Bereich des Dosiergehäuses und die zweite Leitungsverbindung mündet in einen zweiten Bereich des Dosiergehäuses. Aus dem Stand der Technik ist zudem die EP 3 050 419 B1 bekannt, die eine Überdruck-basierte Vereinzelungsvorrichtung offenbart, bei welcher vereinzelte Körner Druckluft-beschleunigt durch eine Kornleitung transportiert werden. Die Druckdifferenz-Erzeugung und der Druckluft-Transport können mittels einer einzigen Druckluftzufuhr realisiert werden, wobei allerdings in einem Abgabebereich eine zusätzliche Druckluftzufuhr vorgesehen sein kann. Zwar kann damit eine gewisse Anpassung auf verschiedene Verteilgüter ermöglicht werden. Nachteilig ist jedoch, dass sich die unterschiedlichen Druckluftzufuhren durch deren jeweiligen Luftströmungen bzw. deren Strömungsgeschwindigkeiten und deren Druckniveaus negativ beeinflussen können, da für diese keine aufeinander abgestimmte Dimensionierung vorgesehen ist. So kann es, aufgrund der nicht aufeinander abgestimmten Dimensionierung, vorkommen, dass eine Übergabe von Körner von einem Vereinzelungsorgan in die Kornleitung nicht reibungslos erfolgt oder auch gänzlich scheitert. Weiterer Stand der Technik ist offenbart in US 2018/310468 A1 und EP 2 496064 A1.

Eine Aufgabe der Erfindung ist es, eine verbesserte und/oder alternative landwirtschaftliche Vorrichtung zu schaffen, insbesondere eine z. B. für unterschiedliche Kornsorten und/oder universell einsetzbare landwirtschaftliche Vorrichtung.

Diese Aufgabe kann mit den Merkmalen des Anspruchs 1 gelöst werden. Vorteilhafte Weiterbildungen der Erfindung sind in den abhängigen Ansprüchen und der folgenden Beschreibung offenbart.

Die Erfindung betrifft eine landwirtschaftliche Vorrichtung zum Ausbringen von insbesondere vereinzelten Körnern (z. B. Saatgut, Dünger und/oder anderes Verteilgut, etc.) und/oder zum Verteilen insbesondere vereinzelter Körnern auf einem Ackerboden (z. B. in einer Furche im Ackerboden). Die landwirtschaftliche Vorrichtung umfasst eine Vielzahl von Dosiervorrichtungen (insbesondere Vereinzelungsvorrichtungen) zum Druckdifferenz-basierten (zweckmäßig Druckdifferenz-unterstützten) Vereinzeln der Körner mittels eines zweckmäßig drehbaren Vereinzelungsorgans, z. B. einer Dosierscheibe (insbesondere Vereinzelungsscheibe) oder Dosiertrommel (Vereinzelungstrommel) oder einem anderen geeigneten Vereinzelungsorgan.

Die einzelnen Dosiervorrichtungen weisen eine Kornkammer auf.

Es ist möglich, dass die Kornkammer Druckluft-beaufschlagbar ist, z. B. mittels der unten offenbarten ersten Leitungen und/oder zweiten Leitung. Alternativ oder ergänzend können z. B. in der Kornkammer die Körner mittels des Vereinzelungsorgans zweckmäßig vereinzelt werden.

Die einzelnen Dosiervorrichtungen, insbesondere deren Kornkammer, sind zweckmäßig fluidisch verbunden mit einer ersten Leitung, einer zweiten Leitung und einer dritten Leitung.

Die erste Leitung dient zum Druckluft-basierten (insbesondere Druckluft-unterstützten) Zuführen der Körner, vorzugsweise aus einem Hauptbehälter insbesondere in die Kornkammer, wodurch z. B. die einzelnen Dosiervorrichtungen Druckluft-basiert mit Körnern versorgt werden können. Die Körner können somit vorzugsweise mittels einer Druckluftströmung zu den einzelnen Dosiervorrichtungen transportiert werden.

Die zweite Leitung dient zum Zuführen von Druckluft, insbesondere in die Kornkammer, um eine Druckdifferenz zum Druckdifferenz-basierten Vereinzeln der Körner insbesondere in der Kornkammer zu erzeugen.

Die dritte Leitung dient zum Zuführen von Druckluft, um insbesondere aus der Kornkammer vereinzelte Körner Druckluft-basiert (insbesondere Druckluft-unterstützt und/oder mittels einer Druckluftströmung) zum Ackerboden (z. B. zu einer Furche im Ackerboden) zu transportieren, wodurch z. B. vereinzelte Körner gegenüber einem rein Schwerkraft-basierten Fallenlassen vorteilhaft schneller zum Ackerboden transportiert werden können. Die vereinzelten Körner können somit vorzugsweise mittels einer Druckluftströmung in der dritten Leitung zum Ackerboden transportiert werden.

Die dritte Leitung dient vorzugsweise zum Zuführen von Druckluft, um insbesondere aus der Kornkammer vereinzelte Körner Druckluft-beschleunigt, z. B. mittels einer Druckluftströmung, zum Ackerboden zu transportieren.

Die landwirtschaftliche Vorrichtung kann z. B. einen Hauptbehälter (z. B. einen zentralen Haupttank) zur Bevorratung der Körner und vorzugsweise zum Versorgen der einzelnen Dosiervorrichtungen mit den Körnern umfassen.

Die landwirtschaftliche Vorrichtung umfasst somit insbesondere ein Seed-On-Demand-System (SOD-System) oder Nursing-System.

Es ist möglich, dass die landwirtschaftliche Vorrichtung zumindest eine Drucklufterzeugungseinrichtung (z. B. eine Gebläseeinrichtung) zur Erzeugung von Druckluft aufweist, um die erste Leitung, die zweite Leitung und/oder die dritte Leitung der einzelnen Dosiervorrichtungen mit Druckluft zu versorgen.

Die landwirtschaftliche Vorrichtung kann z. B. zumindest eine erste Drucklufterzeugungseinrichtung zur Erzeugung von Druckluft aufweisen, um die erste Leitung mit Druckluft zu versorgen, und/oder zumindest eine zweite Drucklufterzeugungseinrichtung zur Erzeugung von Druckluft aufweisen, um die zweite Leitung und/oder die dritte Leitung mit Druckluft zu versorgen.

Die landwirtschaftliche Vorrichtung kann z. B. zumindest zwei zweite Drucklufterzeugungseinrichtungen aufweisen.

Z. B. kann eine der zweiten Drucklufterzeugungseinrichtungen vorzugsweise vorgesehen sein, um Druckluft für eine erste (z. B. linke) Reihe mehrerer Dosiervorrichtungen zu erzeugen, und z. B. eine der zweiten Drucklufterzeugungseinrichtung kann zweckmäßig vorgesehen sein, um Druckluft für eine zweite (z. B. rechte) Reihe mehrerer Dosiervorrichtungen zu erzeugen.

Es ist möglich, dass die erste Drucklufterzeugungseinrichtung z. B. vorgesehen sein kann, um Druckluft für vorzugsweise die erste Reihe und die zweite Reihe zu erzeugen.

Die dritte Leitung zweigt zweckmäßig in einem Abzweigbereich von der zweiten Leitung ab und zwar insbesondere stromaufwärts der einzelnen Dosiervorrichtungen.

Der Abzweigbereich kann z. B. den Eingang der dritten Leitung bilden.

Die erste Leitung kann z. B. ausgangsseitig in die Kornkammer führen, insbesondere in der Kornkammer münden. Es ist möglich, dass Druckluft aus der ersten Leitung in die Kornkammer gelangt, z. B. zumindest zeitweise (z. B. bei noch leerer Dosiervorrichtung) und/oder zumindest in abgeschwächter Form. Es ist allerdings ebenfalls möglich, dass Druckluft aus der ersten Leitung (z. B. bei voller Dosiervorrichtung) nicht in die Kornkammer gelangt, z. B. weil sie zuvor zweckmäßig z. B. über eine Perforierung entweichen kann.

Die erste Leitung ist vorzugsweise eingangsseitig mit einer Drucklufterzeugungseinrichtung fluidisch verbunden.

Die zweite Leitung kann z. B. ausgangsseitig in die Kornkammer führen, vorzugsweise in die Kornkammer münden.

Die zweite Leitung ist vorzugsweise eingangsseitig mit einer Drucklufterzeugungseinrichtung fluidisch verbunden.

Die dritte Leitung kann z. B. ausgangsseitig zum Ackerboden (z. B. zu einer Furche im Ackerboden) führen.

Die dritte Leitung zweigt vorzugsweise eingangsseitig von der zweiten Leitung ab und/oder ist über die zweite Leitung eingangsseitig mit einer Drucklufterzeugungseinrichtung fluidisch verbunden.

Es ist möglich, dass die dritte Leitung eine Durchlassöffnung (insbesondere eine Aussparung oder Loch) zur Aufnahme vereinzelter Körner z. B. aus der Kornkammer aufweist.

Die Durchlassöffnung ist vorzugsweis in einer Mantelfläche der dritten Leitung ausgebildet und somit insbesondere seitlich.

Es ist möglich, dass die Durchlassöffnung z. B. abschnittsweise durch das Vereinzelungsorgan geschlossen wird und/oder die Durchlassöffnung gegenüber einer Druckdifferenz-Unterbrechungseinrichtung (z. B. eine Abdichtkonstruktion, eine Rolle, ein Dichtelement etc.) angeordnet ist.

Es ist möglich, dass insbesondere im Betrieb der landwirtschaftlichen Vorrichtung sich entlang der Durchlassöffnung eine Strömungsbarriere und/oder ein Coandä-Effekt ausbildet bzw. einstellt (und z. B. Druckluft (insbesondere eine Druckluftströmung) in der dritten Leitung und Druckluft in der Kornkammer aufeinander einwirken), z. B. so, dass Druckluft aus der Kornkammer zumindest im Wesentlichen an einem Eindringen über die Durchlassöffnung in die dritte Leitung gehindert wird und/oder so dass Druckluft aus der dritten Leitung zumindest im Wesentlichen an einem Eindringen über die Durchlassöffnung in die Kornkammer gehindert wird und/oder Druckluft (insbesondere eine Druckluftströmung) in der dritten Leitung an der Kornkammer vorbei in Richtung Ausgang der dritten Leitung geleitet wird.

Die Durchlassöffnung kann z. B. in einem Kurvenabschnitt der dritten Leitung angeordnet sein, vorzugsweise in einem radial äußeren Teilbereich des Kurvenabschnitts.

Die dritte Leitung kann z. B. einen Leitungsabschnitt stromaufwärts der Durchlassöffnung umfassen und einen Leitungsabschnitt stromabwärts der Durchlassöffnung.

Es ist möglich, dass vereinzelte Körner über die Durchlassöffnung in die dritte Leitung gelangen und von der Druckluft, insbesondere einer Druckluftströmung, in der dritten Leitung zweckmäßig erfasst und beschleunigt werden, um so insbesondere schneller zum Ackerboden transportiert werden zu können.

Es ist möglich, dass die landwirtschaftliche Vorrichtung ausgeführt ist, so dass im Betrieb zweckmäßig ein Druckluft-Niveau in der dritten Leitung größer ist als ein Druckluft-Niveau in der Kornkammer und/oder in der ersten Leitung und/oder in der zweiten Leitung.

Ein Strömungsquerschnitt der dritten Leitung ist z. B. stromabwärts und/oder stromaufwärts der Durchlassöffnung kleiner als ein Strömungsquerschnitt der zweiten Leitung.

Es ist möglich, dass die einzelnen Dosiervorrichtungen einen (vorzugsweise perforierten) Kornzwischenbehälter aufweisen und/oder die erste Leitung der einzelnen Dosiervorrichtungen abschnittsweise perforiert ist.

Es ist möglich, dass die erste Leitung in den Kornzwischenbehälter führt und/oder in die Kornkammer mündet. Allerdings sind ebenfalls Ausführungsformen möglich, bei denen die einzelnen Dosiervorrichtungen keinen Kornzwischenbehälter aufweisen. Im Kontext der Erfindung sind somit z. B. Ausführungsformen umfasst, bei denen die erste Leitung z. B. direkt oder indirekt (z. B. über einen Kornzwischenbehälter) in die Kornkammer mündet.

Die erste Leitung und/oder der Kornzwischenbehälter kann mit einer Perforierung versehen sein. Über die Perforierung kann z. B. Druckluft zum Transport der Körner entweichen. Sind z. B. ausreichend Körner zur Verfügung gestellt, blockieren die Körner die Perforierung und der Transport von Körnern aus dem Hauptbehälter wird unterbrochen (insbesondere, weil keine Druckluft mehr entweichen kann). Sobald Körner abdosiert sind und die Perforierung freigelegt wird, wird der Druckluft-basierte Transport der Körner aus dem Hauptbehälter zweckmäßig aktiviert.

Die hierin erwähnte "Druckluft" ist vorzugsweise "positive Druckluft".

Die Erfindung kann zweckmäßig bei generell nach dem Prinzip der Druckdifferenz (Differenzdruckprinzip) arbeitenden Vereinzelungsvorrichtungen eingesetzt werden und umfasst vorzugsweise mit positiver Druckluft und somit insbesondere mit Überdruck arbeitende Vereinzelungsvorrichtungen. Die erste Leitung, die zweite Leitung und/oder die dritte Leitung kann vorzugsweise eine Schlauch- und/oder Rohrleitung umfassen.

Die ersten Leitungen der Dosiervorrichtungen bilden vorzugsweise ein erstes Verteilsystem. Das erste Verteilsystem dient insbesondere zum Druckluft-basierten Zuführen der Körner, vorzugsweise aus dem Hauptbehälter, an die einzelnen Dosiervorrichtungen (insbesondere deren Kornkammer).

Die zweiten Leitungen und die dritten Leitungen bilden vorzugsweise ein zweites Verteilsystem. Das zweite Verteilsystem dient mittels der zweiten Leitungen einerseits zum Zuführen von Druckluft, um eine Druckdifferenz zum Druckdifferenz-basierten Vereinzeln der Körner in den einzelnen Dosiervorrichtungen (insbesondere deren Kornkammer) zu erzeugen, und mittels der dritten Leitungen andererseits zum Zuführen von Druckluft, um insbesondere aus der Kornkammer der einzelnen Dosiervorrichtungen vereinzelte Körner Druckluft-basiert zum Ackerboden (z. B. zu einer Furche im Ackerboden) zu transportieren.

Zu erwähnen ist noch, dass die einzelnen Dosiervorrichtungen vorzugsweise jeweils mit der ersten Leitung, der zweiten Leitung und/oder der dritten Leitung insbesondere fluidisch verbunden sind.

Zu erwähnen ist außerdem, dass die Druckluft in der ersten Leitung, der zweiten Leitung und/oder der dritten Leitung vorzugsweise eine Druckluftströmung bildet.

Die zuvor beschriebenen bevorzugten Ausführungsformen und Merkmale der Erfindung sind zweckmäßig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer landwirtschaftlichen Vorrichtung gemäß einer Ausführungsform der Erfindung,
- Figur 2: eine andere schematische Ansicht eines Teils der landwirtschaftlichen Vorrichtung der Figur 1,
- Figur 3: eine schematische Ansicht einer landwirtschaftlichen Vorrichtung gemäß einer anderen Ausführungsform der Erfindung,
- Figur 4: eine perspektivische Ansicht einer Dosiervorrichtung mit insbesondere drei Leitungen für eine landwirtschaftliche Vorrichtung gemäß einer Ausführungsform der Erfindung,
- Figur 5: eine schematische Ansicht eines Funktionsprinzips für eine landwirtschaftliche Vorrichtung gemäß einer Ausführungsform der Erfindung, und
- Figur6: eine Schnittansicht einer Dosiervorrichtung mit insbesondere drei Leitungen für eine landwirtschaftliche Vorrichtung gemäß einer Ausführungsform der Erfindung

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen.

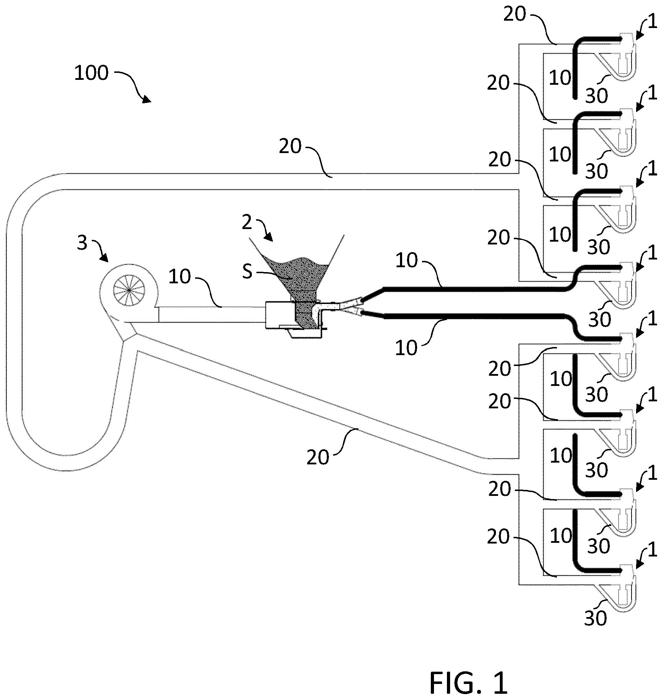

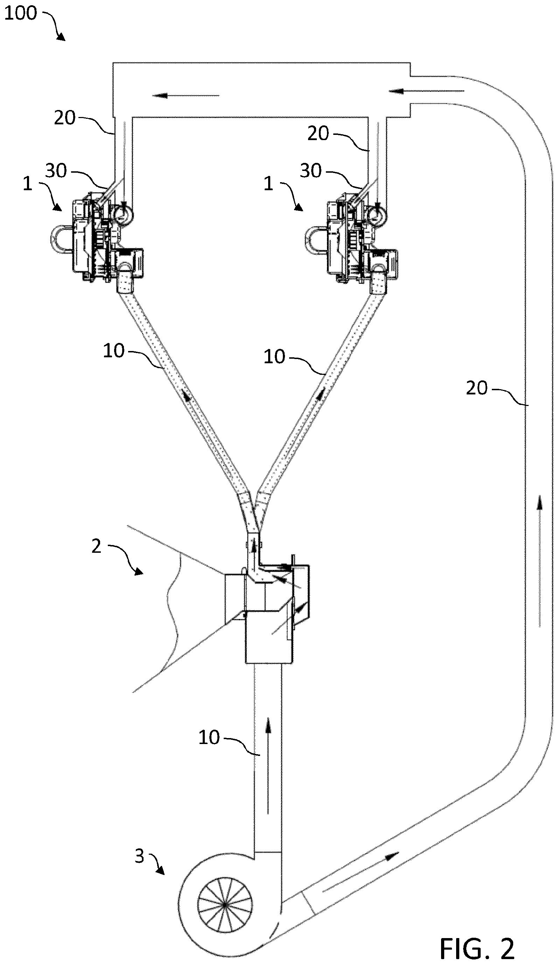

Figur 1 zeigt eine schematische Ansicht einer landwirtschaftlichen Vorrichtung 100 gemäß einer Ausführungsform der Erfindung, wobei Figur 2 eine andere schematische Ansicht eines Teils der landwirtschaftlichen Vorrichtung 100 der Figur 1 zeigt. Die landwirtschaftliche Vorrichtung 100 wird nachfolgend unter gemeinsamer Bezugnahme auf die Figuren 1 und 2 beschrieben.

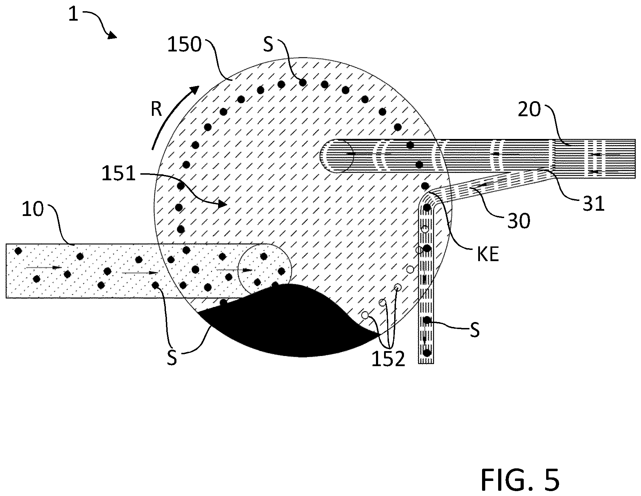

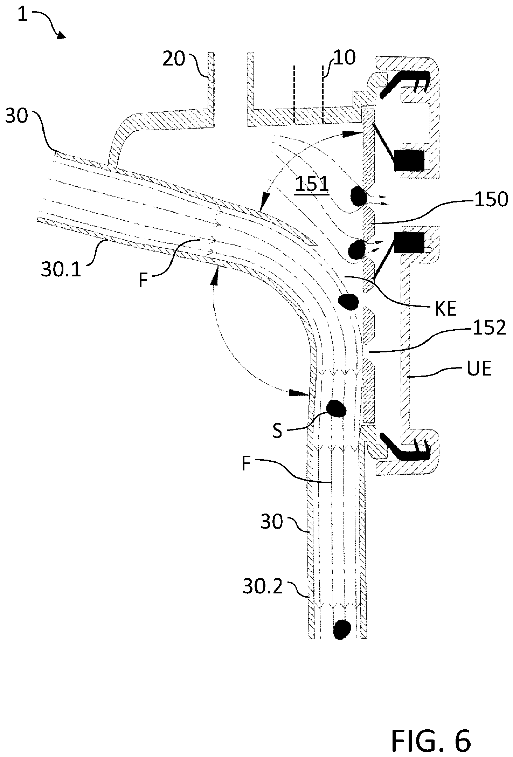

Die landwirtschaftliche Vorrichtung 100 dient zum Ausbringen und insbesondere Verteilen von vereinzelten Körnern S auf einem Ackerboden (z. B. in einer Furche im Ackerboden) und umfasst eine Vielzahl von Dosiervorrichtungen (insbesondere Vereinzelungsvorrichtungen) 1 zum Druckdifferenz-basierten (Druckdifferenz-unterstützten) Vereinzeln der Körner S mittels eines drehbaren Vereinzelungsorgans 150 (z. B. Figuren 5 und 6). Das Vereinzelungsorgan 150 ist zweckmäßig als Vereinzelungsscheibe 150 ausgeführt, kann z. B. aber auch eine Vereinzelungstrommel sein.

Ein zweckmäßig zentraler Hauptbehälter 2 dient zur Bevorratung der Körner S und zum vorzugsweise Druckluft-basierten Versorgen der einzelnen Dosiervorrichtungen 1 mit den Körnern S.

Die einzelnen Dosiervorrichtungen 1 umfassen eine Kornkammer 151 (z. B. Figuren 5 und 6).

Die einzelnen Dosiervorrichtungen 1 sind fluidisch verbunden mit einer ersten Leitung 10, einer zweiten Leitung 20 und einer dritten Leitung 30.

Die erste Leitung 10 (in Figur 1 die jeweils insbesondere fettgedruckte Leitung 10) dient zum Druckluft-basierten Zuführen der Körner S aus dem Hauptbehälter 2 in die Kornkammer 151, wodurch die einzelnen Dosiervorrichtungen 1 Druckluft-basiert mit Körnern S versorgt werden können. Die erste Leitung 10 stellt somit eine Kornversorgungsleitung dar.

Die zweite Leitung 20 dient zum Zuführen von Druckluft in die Kornkammer 151, um die Druckdifferenz zum Druckdifferenz-basierten Vereinzeln der Körner S in der Kornkammer 151 zu erzeugen.

Die dritte Leitung 30 dient zum Zuführen von Druckluft, um insbesondere aus der Kornkammer 151 vereinzelte Körner S Druckluft-basiert und zwar insbesondere Druckluft-beschleunigt und somit gegenüber rein Schwerkraft-basiertem Transport schneller zum Ackerboden (z. B. zu einer Furche im Ackerboden) transportieren zu können.

Eine einzige Drucklufterzeugungseinrichtung 3 dient zur Erzeugung von Druckluft, um gemeinsam die erste Leitung 10, die zweite Leitung 20 und die dritte Leitung 30 der einzelnen Dosiervorrichtungen 1 mit Druckluft zu versorgen.

Insbesondere Figur 1 zeigt, dass die ersten Leitungen 10 der Dosiervorrichtungen 1 ein erstes Verteilsystem bilden. Das erste Verteilsystem dient zum Druckluft-basierten Zuführen der Körner aus dem Hauptbehälter 2 an die einzelnen Dosiervorrichtungen 1. Die zweiten Leitungen 20 und die dritten Leitungen 30 bilden ein zweites Verteilsystem. Das zweite Verteilsystem dient mittels der zweiten Leitungen 20 zum Zuführen von Druckluft an die einzelnen Dosiervorrichtungen 1, um eine Druckdifferenz zum Druckdifferenz-basierten Vereinzeln der Körner S in den einzelnen Dosiervorrichtungen 1 zu erzeugen, und mittels der dritten Leitungen 30 zum Zuführen von Druckluft, um aus der Kornkammer 151 der einzelnen Dosiervorrichtungen 1 vereinzelte Körner S Druckluft-basiert hin zum Ackerboden (z. B. zu einer Furche im Ackerboden) zu transportieren. Die Druckluftversorgung des ersten Verteilsystems und des zweiten Verteilsystems erfolgt zweckmäßig über die Drucklufterzeugungseinrichtung 3.

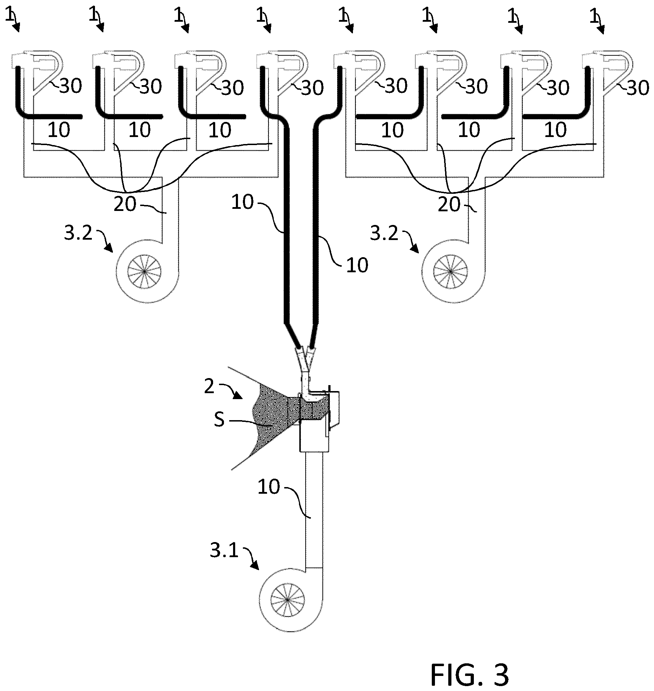

Figur 3 zeigt eine schematische Ansicht einer landwirtschaftlichen Vorrichtung 100 gemäß einer anderen Ausführungsform der Erfindung.

Eine Besonderheit der in Figur 3 gezeigten Ausführungsform ist, dass mehrere Drucklufterzeugungseinrichtungen 3.1 und 3.2 zur Erzeugung von Druckluft vorgesehen sind.

Die Drucklufterzeugungseinrichtung 3.1 dient zur Erzeugung von Druckluft, um die erste Leitung 10 der einzelnen Dosiervorrichtungen 1 mit Druckluft zu versorgen.

Eine Drucklufterzeugungseinrichtung 3.2 dient zur Erzeugung von Druckluft, um die zweite Leitung 20 und die dritte Leitung 30 der vier in Figur 3 linken einzelnen Dosiervorrichtungen 1 mit Druckluft zu versorgen.

Eine Drucklufterzeugungseinrichtungen 3.2 dient zur Erzeugung von Druckluft, um die zweite Leitung 20 und die dritte Leitung 30 der vier in Figur 3 rechten einzelnen Dosiervorrichtungen 1 mit Druckluft zu versorgen.

Daraus folgt, dass die Druckluftversorgung des ersten Verteilsystems über die Drucklufterzeugungseinrichtung 3.1 erfolgt, während die Druckluftversorgung des zweiten Verteilsystems über die Drucklufterzeugungseinrichtungen 3.2 erfolgt.

Die Drucklufterzeugungseinrichtungen der Figuren 1 bis 2 können z. B. wie in der WO 2016 165 990 A1 offenbart, ausgeführt sein.

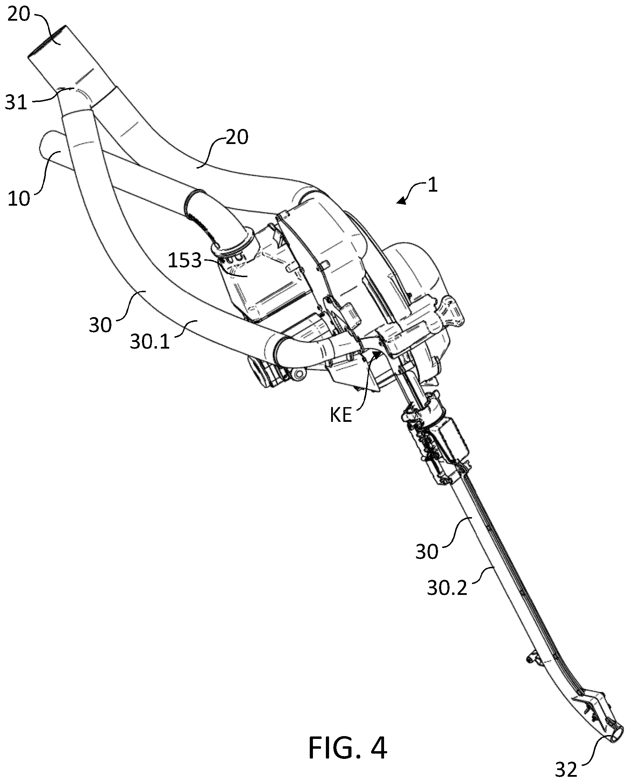

Figur 4 zeigt eine perspektivische Ansicht einer einzelnen Dosiervorrichtung 1 mit insbesondere der ersten Leitung 10, der zweiten Leitung 20 und der dritten Leitung 30, wie sie z. B. in der landwirtschaftlichen Vorrichtung 100 der Figuren 1 bis 4 eingesetzt werden kann. Mit anderen Worten können die in den Figuren 1 bis 4 gezeigten Dosiervorrichtungen 1 vorzugsweise wie in Figur 5 gezeigt ausgeführt sein.

Figur 4 zeigt insbesondere, dass die dritte Leitung 30 in einem Abzweigbereich 31 von der zweiten Leitung 20 abzweigt, so dass der Abzweigbereich 31 zweckmäßig einen Eingang der dritten Leitung 30 bildet, und einen Ausgang 32 zum Ausgeben vereinzelter Körner S zum Ackerboden aufweist.

Die Dosiervorrichtung 1 umfasst optional einen vorzugsweise perforierten Kornzwischenbehälter 153, über den die erste Leitung 10 in die Kornkammer 152 führt.

Bezugszeichen KE zeigt auf einen Bereich, in dem eine (in Figur 4 nicht zu sehende) Durchlassöffnung KE angeordnet ist, über die vereinzelte Körner S aus der Kornkammer 151 in die dritte Leitung 151 eingeführt werden können, so dass sie von der Druckluft in der dritten Leitung 30 erfasst und in beschleunigter Form zum Ausgang 32 transportiert werden können. Die dritte Leitung 30 umfasst somit einen Leitungsabschnitt 30.1 stromaufwärts der Durchlassöffnung KE und einen Leitungsabschnitt 30.2 stromabwärts der Durchlassöffnung KE.

Figur 4 ist auch zu entnehmen, dass ein Strömungsquerschnitt der dritten Leitung 30 zweckmäßig stromabwärts und/oder stromaufwärts der Durchlassöffnung KE kleiner ist als ein Strömungsquerschnitt der zweiten Leitung 20.

Figur 5 zeigt eine schematische Ansicht eines Funktionsprinzips für eine landwirtschaftliche Vorrichtung 100 gemäß einer Ausführungsform der Erfindung, wobei Figur 6 eine zugehörige Schnittansicht einer Dosiervorrichtung 1 zeigt.

Die Figuren 5 und 6 zeigen zunächst einen Teil einer Dosiervorrichtung 1, insbesondere ein als Dosierscheibe ausgebildetes drehbares Vereinzelungsorgan 150 mit Aussparungen (z. B. Löchern) 152 zum Druckdifferenz-basierten Vereinzeln, Halten und Transportieren der Körner S. Bezugszeichen R kennzeichnet die Drehrichtung des Vereinzelungsorgans 150. Bezugszeichen 151 kennzeichnet erneut die Kornkammer, die z. B. seitlich von dem Vereinzelungsorgan 150 begrenzt wird. In Figur 6 kann die erste Leitung 10 nicht gesehen werden, so dass sie nur rein schematisch und zu Darstellungszwecken rechts oben in gestrichelter Form angedeutet ist.

Die erste Leitung 10 dient zum Druckluft-basierten/unterstützten Zuführen der Körner S in die Kornkammer 151. Die zweite Leitung 20 dient zum Zuführen von Druckluft in die Kornkammer 151, um eine Druckdifferenz zu erzeugen, so dass die Körner S in der Kornkammer 151 mittels des Vereinzelungsorgans 150 Druckdifferenz-basiert/unterstützt vereinzelt werden können.

Den Figuren 5 und 6 kann entnommen werden, dass die dritte Leitung 30 eine Durchlassöffnung KE zur Aufnahme vereinzelter Körner S aus der Kornkammer 151 aufweist und die Durchlassöffnung KE in einer Mantelfläche der dritten Leitung 30 und somit seitlich ausgebildet ist. Die Durchlassöffnung KE ist in einem Kurvenabschnitt der dritten Leitung 30 angeordnet und zwar insbesondere in einem radial äußeren Teilbereich des Kurvenabschnitts. Die Durchlassöffnung KE kann abschnittsweise durch das Vereinzelungsorgan 150 geschlossen werden.

Eine Druckdifferenz-Unterbrechungseinrichtung UE (z. B. eine Abdichtkonstruktion, eine Rolle, ein Dichtelement etc.) zweckmäßig gegenüber der Durchlassöffnung KE kann die Druckdifferenz unterbrechen, so dass Körner S sich von der Vereinzelungsscheibe 150 lösen und über die Durchlassöffnung KE in die dritte Luftleitung 30 eingeführt werden können.

Vereinzelte Körner S werden durch die Druckluftströmung F in der dritten Leitung 30 mitgerissen und beschleunigt zum Ackerboden transportiert.

Eine weitere Besonderheit ist, dass sich zweckmäßig im Betrieb der landwirtschaftlichen Vorrichtung 100 entlang der Durchlassöffnung KE eine Strömungsbarriere ausbilden/einstellen kann, insbesondere bewirkt durch einen Coandä-Effekt.

Die Strömungsbarriere und/oder der Coandä-Effekt bewirken insbesondere, dass Druckluft aus der Kornkammer 151 an einem Eindringen über die Durchlassöffnung KE in die dritte Leitung 30 im Wesentlichen gehindert wird und alternativ oder ergänzend dass Druckluft aus der dritten Leitung 30 an einem Eindringen über die Durchlassöffnung KE in die Kornkammer 151 im Wesentlichen gehindert wird und/oder Druckluft, insbesondere eine Druckluftströmung, in der dritten Leitung 30 an der Kornkammer 151 vorbei in Richtung Ausgang 32 der dritten Leitung 30 geleitet wird. Druckluft aus der zweiten Leitung 20 und vorzugsweise Druckluft aus der ersten Leitung 10 und somit insbesondere Druckluft in der Kornkammer 151 und Druckluft, insbesondere eine Druckluftströmung, in der dritten Leitung 30 wirken entlang der Durchlassöffnung KE also vorzugsweise so aufeinander ein, dass einerseits im Wesentlichen keine Druckluft aus der dritten Leitung 30 über die Durchlassöffnung KE in die Kornkammer 151 gelangt und andererseits im Wesentlichen keine Druckluft aus der Kornkammer 151 über die Durchlassöffnung KE in die dritte Leitung 30 gelangt. Die Erfindung ist nicht auf die oben beschriebenen bevorzugten Ausführungsformen beschränkt. Vielmehr ist eine Vielzahl von Varianten und Abwandlungen möglich, die in den Schutzbereich des Anspruchs 1 fallen.

Darüber hinaus beansprucht die Erfindung auch Schutz für den Gegenstand und die Merkmale der Unteransprüche .

### Bezugszeichenliste

- 1: Dosiervorrichtung(en)
- 2: Hauptbehälter
- 3: Drucklufterzeugungseinrichtung
- 3.1: Drucklufterzeugungseinrichtung
- 3.2: Drucklufterzeugungseinrichtung

- 10: erste Leitung(en)
- 20: zweite Leitung(en)
- 30: dritte Leitung(en)
- F: Druckluftströmung
- 30.1: stromaufwärtiger Leitungsabschnitt
- 30.2: stromabwärtiger Leitungsabschnitt
- 31: Abzweigbereich und/oder Eingang
- 32: Ausgang

- 150: Vereinzelungsorgan
- R: Drehrichtung
- 151: Kornkammer
- 152: Aussparungen
- 153: Kornzwischenbehälter
- UE: Druckdifferenz-Unterbrechungseinrichtung

- S: Körner

- 100: Landwirtschaftliche Vorrichtung

## Patentansprüche

1. Landwirtschaftliche Vorrichtung (100) zum Ausbringen von Körnern (S), umfassend eine Vielzahl von Dosiervorrichtungen (1) zum Druckdifferenz-basierten Vereinzeln der Körnern (S) mittels eines Vereinzelungsorgans (150), wobei die einzelnen Dosiervorrichtungen (1) eine Kornkammer (151) aufweisen und verbunden sind mit:
- einer ersten Leitung (10) zum Druckluft-basierten Zuführen der Körner (S) aus einem Hauptbehälter (2) zur Bevorratung der Körner (S),
- einer zweiten Leitung (20) zum Zuführen von Druckluft, um eine Druckdifferenz zum Druckdifferenz-basierten Vereinzeln der Körner (S) zu erzeugen, und
- einer dritten Leitung (30) zum Zuführen von Druckluft, um vereinzelte Körner (S) Druckluft-basiert zum Ackerboden zu transportieren,
wobei die dritte Leitung (30) in einem Abzweigbereich (31) von der zweiten Leitung (20) abzweigt, **gekennzeichnet dadurch, dass** ein Strömungsquerschnitt der dritten Leitung (30) kleiner ist als ein Strömungsquerschnitt der zweiten Leitung (20).

2. Landwirtschaftliche Vorrichtung (100) nach Anspruch 1, wobei der Hauptbehälter (2) zur Bevorratung der Körner (S) zum Versorgen der einzelnen Dosiervorrichtungen (1) mit den Körnern (S) dient.

3. Landwirtschaftliche Vorrichtung (100) nach Anspruch 1 oder 2, wobei die landwirtschaftliche Vorrichtung (100) zumindest eine Drucklufterzeugungseinrichtung (3) zur Erzeugung von Druckluft aufweist, um die erste Leitung (10), die zweite Leitung (20) und die dritte Leitung (30) der einzelnen Dosiervorrichtungen (1) mit Druckluft zu versorgen.

4. Landwirtschaftliche Vorrichtung (100) nach einem der vorhergehenden Ansprüche, wobei die landwirtschaftliche Vorrichtung (100)
- zumindest eine erste Drucklufterzeugungseinrichtung (3.1) zur Erzeugung von Druckluft aufweist, um die erste Leitung (10) mit Druckluft zu versorgen, und
- zumindest eine zweite Drucklufterzeugungseinrichtung (3.2) zur Erzeugung von Druckluft aufweist, um die zweite Leitung (20) und die dritte Leitung (30) mit Druckluft zu versorgen.

5. Landwirtschaftliche Vorrichtung (100) nach einem der vorhergehenden Ansprüche, wobei
- die erste Leitung (10) ausgangsseitig in die Kornkammer (151) führt,
- die zweite Leitung (20) ausgangsseitig in die Kornkammer (151) führt, und
- die dritte Leitung (30) ausgangsseitig einen Ausgang (32) zum Ausgeben vereinzelter Körner (S) zum Ackerboden aufweist.

6. Landwirtschaftliche Vorrichtung (100) nach einem der vorhergehenden Ansprüche, wobei die dritte Leitung (30) eine Durchlassöffnung (KE) zur Aufnahme vereinzelter Körner (S) aus der Kornkammer (151) aufweist.

7. Landwirtschaftliche Vorrichtung (100) nach Anspruch 6, wobei die Durchlassöffnung (KE) in einer Mantelfläche der dritten Leitung (30) ausgebildet ist.

8. Landwirtschaftliche Vorrichtung (100) nach Anspruch 6 oder 7, wobei die Durchlassöffnung (KE) abschnittsweise durch das Vereinzelungsorgan (150) geschlossen wird und/oder die Durchlassöffnung (KE) gegenüber einer Druckdifferenz-Unterbrechungseinrichtung (UE) angeordnet ist.

9. Landwirtschaftliche Vorrichtung (100) nach einem der Ansprüche 6 bis 8, wobei sich entlang der Durchlassöffnung (KE) eine Strömungsbarriere und/oder ein Coandä-Effekt einstellt, vorzugsweise
- so dass Druckluft aus der Kornkammer (151) an einem Eindringen über die Durchlassöffnung (KE) in die dritte Leitung (30) gehindert wird und/oder
- so dass Druckluft aus der dritten Leitung (30) an einem Eindringen über die Durchlassöffnung (KE) in die Kornkammer (151) gehindert wird und/oder Druckluft in der dritten Leitung (30) an der Kornkammer (151) vorbei in Richtung Ausgang (32) der dritten Leitung (30) geleitet wird.

10. Landwirtschaftliche Vorrichtung (100) nach einem der Ansprüche 6 bis 9, wobei die Durchlassöffnung (KE) in einem Kurvenabschnitt der dritten Leitung (30) angeordnet ist, vorzugsweise in einem radial äußeren Teilbereich des Kurvenabschnitts.

11. Landwirtschaftliche Vorrichtung (100) nach einem der Ansprüche 6 bis 10, wobei die dritte Leitung (30) einen Leitungsabschnitt (30.1) stromaufwärts der Durchlassöffnung (KE) und einen Leitungsabschnitt (30.2) stromabwärts der Durchlassöffnung (KE) aufweist.

12. Landwirtschaftliche Vorrichtung (100) nach einem der Ansprüche 6 bis 11, wobei vereinzelte Körner (S) über die Durchlassöffnung (KE) in die dritte Leitung (30) gelangen und von einer Druckluftströmung (F) in der dritten Leitung (30) erfasst und beschleunigt werden.

13. Landwirtschaftliche Vorrichtung (100) nach einem der vorhergehenden Ansprüche, wobei die landwirtschaftliche Vorrichtung (100) ausgeführt ist, so dass im Betrieb ein Druckluft-Niveau in der dritten Leitung (30) größer ist als ein Druckluft-Niveau in der Kornkammer (151) und/oder der zweiten Leitung (20).

14. Landwirtschaftliche Vorrichtung (100) nach einem der vorhergehenden Ansprüche, wobei die erste Leitung (10) der einzelnen Dosiervorrichtungen (1) abschnittsweise perforiert ist und/oder die einzelnen Dosiervorrichtungen (1) einen perforierten Kornzwischenbehälter (153) aufweisen und die erste Leitung (10) der einzelnen Dosiervorrichtungen (1) in den Kornzwischenbehälter (153) führt und/oder in der Kornkammer (152) mündet.

## Claims

1. An agricultural device (100) for distributing grains (S), comprising a multiplicity of metering devices (1) for separating the grains (S) on the basis of a pressure difference by means of a separating member (150), wherein the individual metering devices (1) have a grain chamber (151) and are connected to:
- a first line (10) for supplying the grains (S) on the basis of compressed air from a main container (2) for storing the grains (S),
- a second line (20) for supplying compressed air in order to produce a pressure difference with respect to the separating of the grains (S) on the basis of a pressure difference, and
- a third line (30) for supplying compressed air in order to transport separated grains (S) on the basis of compressed air to the arable soil,
wherein the third line (30) branches off from the second line (20) in a branching region (31),
**characterized in that** a flow cross section of the third line (30) is smaller than a flow cross section of the second line (20).

2. The agricultural device (100) according to Claim 1, wherein the main container (2) for storing the grains (S) serves for supplying the individual metering devices (1) with the grains (S).

3. The agricultural device (100) according to Claim 1 or 2, wherein the agricultural device (100) has at least one compressed-air production means (3) for producing compressed air, in order to supply the first line (10), the second line (20) and the third line (30) of the individual metering devices (1) with compressed air.

4. The agricultural device (100) according to one of the preceding claims, wherein the agricultural device (100)
- has at least one first compressed-air production means (3.1) for producing compressed air, in order to supply the first line (10) with compressed air, and
- has at least one second compressed-air production means (3.2) for producing compressed air, in order to supply the second line (20) and the third line (30) with compressed air.

5. The agricultural device (100) according to one of the preceding claims, wherein
- the first line (10) leads on the output side into the grain chamber (151),
- the second line (20) leads on the output side into the grain chamber (151), and
- the third line (30) has, on the output side, an output (32) for dispensing separated grains (S) to the arable soil.

6. The agricultural device (100) according to one of the preceding claims, wherein the third line (30) has a through opening (KE) for receiving separated grains (S) from the grain chamber (151).

7. The agricultural device (100) according to Claim 6, wherein the through opening (KE) is formed in a lateral surface of the third line (30).

8. The agricultural device (100) according to Claim 6 or 7, wherein the through opening (KE) is partially closed by the separating member (150), and/or the through opening (KE) is arranged opposite to a pressure-difference interrupting means (UE).

9. The agricultural device (100) according to one of Claims 6 to 8, wherein a flow barrier and/or a Coandǎ effect are/is produced along the through opening (KE), preferably
- such that compressed air from the grain chamber (151) is prevented from penetrating via the through opening (KE) into the third line (30), and/or
- such that compressed air from the third line (30) is prevented from penetrating via the through opening (KE) into the grain chamber (151) and/or compressed air in the third line (30) is conducted past the grain chamber (151) in the direction of the output (32) of the third line (30).

10. The agricultural device (100) according to one of Claims 6 to 9, wherein the through opening (KE) is arranged in a curved portion of the third line (30), preferably in a radially outer partial region of the curved portion.

11. The agricultural device (100) according to one of Claims 6 to 10, wherein the third line (30) has a line portion (30.1) upstream of the through opening (KE) and a line portion (30.2) downstream of the through opening (KE).

12. The agricultural device (100) according to one of Claims 6 to 11, wherein separated grains (S) pass via the through opening (KE) into the third line (30) and are captured and accelerated by a compressed-air flow (F) in the third line (30).

13. The agricultural device (100) according to one of the preceding claims, wherein the agricultural device (100) is designed such that, during operation, a compressed-air level in the third line (30) is greater than a compressed-air level in the grain chamber (151) and/or in the second line (20).

14. The agricultural device (100) according to one of the preceding claims, wherein the first line (10) of the individual metering devices (1) is partially perforated, and/or the individual metering devices (1) have a perforated grain intermediate container (153), and the first line (10) of the individual metering devices (1) leads into the grain intermediate container (153) and/or opens into the grain chamber (152).

## Revendications

1. Dispositif agricole (100) de distribution de grains (S), comprenant une pluralité de dispositifs de dosages (1) pour trier sur la base de la différence de pression les grains (S) au moyen d'un organe de tri (150), dans lequel les divers dispositifs de dosage (1) présentent une chambre de grains (151) et sont reliés à :
- une première conduite (10) pour amener sur la base d'air comprimé les grains (S) provenant d'un contenant principal (2) pour l'approvisionnement des grains (S),
- une deuxième conduite (20) pour amener de l'air comprimé pour produire une différence de pression pour trier les grains (S) sur la base de la différence de pression, et
- une troisième conduite (30) pour amener de l'air comprimé pour transporter des grains (S) triés sur la base de l'air comprimé vers la terre cultivable,
dans lequel la troisième conduite (30) forme dans une zone d'embranchement (31) un embranchement avec la deuxième conduite (20),
**caractérisé en ce qu'**une section transversale d'écoulement de la troisième conduite (30) est plus petite qu'une section transversale d'écoulement de la deuxième conduite (20).

2. Dispositif agricole (100) selon la revendication 1, dans lequel le contenant principal (2) sert à l'approvisionnement des grains (S) pour alimenter les divers dispositifs de dosage (1) en grains (S).

3. Dispositif agricole (100) selon la revendication 1 ou 2, dans lequel le dispositif agricole (100) présente au moins un système de production d'air comprimé (3) pour produire de l'air comprimé pour alimenter en air comprimé la première conduite (10), la deuxième conduite (20) et la troisième conduite (30) des divers dispositifs de dosage (1).

4. Dispositif agricole (100) selon l'une quelconque des revendications précédentes, dans lequel le dispositif agricole (100)
- présente au moins un premier système de production d'air comprimé (3.1) pour produire de l'air comprimé pour alimenter en air comprimé la première conduite (10), et
- présente au moins un deuxième système de production d'air comprimé (3.2) pour produire de l'air comprimé pour alimenter en air comprimé la deuxième conduite (20) et la troisième conduite (30).

5. Dispositif agricole (100) selon l'une quelconque des revendications précédentes, dans lequel
- la première conduite (10) mène côté sortie dans la chambre de grains (151),
- la deuxième conduite (20) mène côté sortie dans la chambre de grains (151), et
- la troisième conduite (30) présente côté sortie une sortie (32) pour envoyer des grains (S) triés vers la terre cultivable.

6. Dispositif agricole (100) selon l'une quelconque des revendications précédentes, dans lequel la troisième conduite (30) présente une ouverture de passage (KE) pour recevoir des grains (S) triés provenant de la chambre de grains (151).

7. Dispositif agricole (100) selon la revendication 6, dans lequel l'ouverture de passage (KE) est réalisée dans une surface enveloppante de la troisième conduite (30).

8. Dispositif agricole (100) selon la revendication 6 ou 7, dans lequel l'ouverture de passage (KE) est fermée par endroits par l'organe de tri (150) et/ou l'ouverture de passage (KE) est disposée en vis-à-vis d'un système d'interruption de différence de pression (UE).

9. Dispositif agricole (100) selon l'une quelconque des revendications 6 à 8, dans lequel une barrière d'écoulement et/ou un effet Coanda se règlent le long de l'ouverture de passage (KE), de préférence
- de sorte que de l'air comprimé provenant de la chambre de grains (151) est empêché de pénétrer dans la troisième conduite (30) en passant par l'ouverture de passage (KE), et/ou
- de sorte que de l'air comprimé provenant de la troisième conduite (30) est empêché de pénétrer dans la chambre de grains (151) en passant par l'ouverture de passage (KE) et/ou de l'air comprimé dans la troisième conduite (30) est acheminé le long de la chambre de grains (151) en direction de la sortie (32) de la troisième conduite (30).

10. Dispositif agricole (100) selon l'une quelconque des revendications 6 à 9, dans lequel l'ouverture de passage (KE) est disposée dans une section incurvée de la troisième conduite (30), de préférence dans une zone partielle radialement extérieure de la section incurvée.

11. Dispositif agricole (100) selon l'une quelconque des revendications 6 à 10, dans lequel la troisième conduite (30) présente une section de conduite (30.1) en amont de l'ouverture de passage (KE) et une section de conduite (30.2) en aval de l'ouverture de passage (KE).

12. Dispositif agricole (100) selon l'une quelconque des revendications 6 à 11, dans lequel des grains (S) triés parviennent en passant par l'ouverture de passage (KE) dans la troisième conduite (30) et sont captés par un écoulement d'air comprimé (F) dans la troisième conduite (30) et sont accélérés.

13. Dispositif agricole (100) selon l'une quelconque des revendications précédentes, dans lequel le dispositif agricole (100) est réalisé de telle sorte qu'en fonctionnement, un niveau d'air comprimé dans la troisième conduite (30) est plus important qu'un niveau d'air comprimé dans la chambre de grains (151) et/ou la deuxième conduite (20).

14. Dispositif agricole (100) selon l'une quelconque des revendications précédentes, dans lequel la première conduite (10) des divers dispositifs de dosage (1) est perforée par endroits et/ou les divers dispositifs de dosage (1) présentent un contenant intermédiaire de grains (153) perforé et la première conduite (10) des divers dispositifs de dosage (1) mène dans le contenant intermédiaire de grains (153) et/ou débouche dans la chambre de grains (152).
